**Europäisches Patentamt**

**European Patent Office**

**Office européen des brevets**

(19)

(11) Veröffentlichungsnummer : **0 211 458 B2**

## (12) NEUE EUROPÄISCHE PATENTSCHRIFT

(45) Veröffentlichungstag der neuen Patentschrift :
**15.12.93 Patentblatt 93/50**

(51) Int. Cl.$^5$ : **B01D 53/34, F23J 15/00**

(21) Anmeldenummer : **86201210.1**

(22) Anmeldetag : **10.07.86**

(54) **Verfahren zur Entfernung von Schadstoffen aus Rauchgas.**

(30) Priorität : **20.07.85 DE 3526008**

(43) Veröffentlichungstag der Anmeldung :
**25.02.87 Patentblatt 87/09**

(45) Bekanntmachung des Hinweises auf die
Patenterteilung :
**01.03.89 Patentblatt 89/09**

(45) Bekanntmachung des Hinweises auf die
Entscheidung über den Einspruch :
**15.12.93 Patentblatt 93/50**

(84) Benannte Vertragsstaaten :
**AT DE FR IT NL SE**

(56) Entgegenhaltungen :
**EP-A- 0 104 335**
**EP-A- 0 129 273**

(56) Entgegenhaltungen :
**CA-A- 1 181 927**
**DE-A- 3 235 559**
**DE-A- 3 403 995**
**NIRO ATOMIZER, Karsten Felsvang-
:"Entschwefelung von Rauchgasen aus der
Verfeuerung verschiedener Braunkohlen mit
dem Sprühabsorptionsverfahren",Übersetzung des Vortrags, gehalten am
3.-7.9.1984, Seiten 1-17**

(73) Patentinhaber : **Graf, Rolf, Dr.**
**Am Felsenkeller 43**
**D-61381 Friedrichsdorf (DE)**

(72) Erfinder : **Graf, Rolf, Dr.**
**Am Felsenkeller 43**
**D-6382 Friedrichsdorf (DE)**

(74) Vertreter : **Schlagwein, Udo, Dipl.-Ing.**
**Patentanwalt Frankfurter Strasse 34**
**D-61231 Bad Nauheim (DE)**

EP 0 211 458 B2

## Beschreibung

Die Erfindung betrifft ein Verfahren nach dem Oberbegriff des Anspruchs 1.

Bei der Verbrennung fossiler Brennstoffe fallen Rauchgase an, die - je nach Schwefelgehalt der Ausgangsstoffe - beträchtliche Schwefeloxidgehalte, insbesondere Gehalte an Schwefeldioxid, aufweisen können. Auch die ständig steigende Zahl von Müllverbrennungsanlagen produziert Abgase, die neben Schwefeloxiden infolge der Verbrennung praktisch stets vorhandener Kunststoffe als weitere Verunreinigungen Chlorwasserstoff und Fluorwasserstoff enthalten. Die Umweltschutzbestimmungen verlangen, daß derartige Verunreinigungen aus den Gasen vor ihrer Ableitung in die Atmosphäre entfernt werden.

Die mit Abstand größte Zahl von Verfahren zur Rauchgasreinigung entfernt die vorgenannten Verunreinigungen durch Naßwäsche der Rauchgase, wobei insbesondere Lösungen oder Aufschlämmungen von mit den Schadstoffen reagierenden Substanzen eingesetzt werden (Ullmann's Encyklopädie der Techn. Chemie, 3. Auflage, Band 2/2 (1968), Seite 419).

Weitere Verfahren arbeiten nach dem Prinzip der sogenannten trockenen Gaswäsche. Dabei werden die Gase durch eine ruhende Schüttung von mit den Verunreinigungen reagierenden Feststoffen, wie z.B. Aktivkohle oder Braunkohlenkoks, geleitet. Die Rauchgasreinigung kann auch mit Hilfe einer sogenannten Wanderschicht erfolgen, bei der der Feststoff während der Abwärtsbewegung im Reaktor zunehmend beladen und schließlich ausgetragen wird. Eine dem Austrag entsprechende Menge frischen Materials wird dabei dem Reaktor im oberen Bereich aufgegeben (Meier zu Köcker "Beurteilung und Aussichten von Verfahren zur Rauchgasentschwefelung"; V.G.B. Kraftwerkstechnik 53 (1973), Seite 516 ff.).

Auch ist eine Einrichtung zur trockenen Entfernung von Schadstoffen aus Rauchgasen bekannt, die in Abzugsrichtung hinter dem Verbrennungsbereich in einem Kesselbereich mit einer Rauchgastemperatur von 700 bis 900°C arbeitet. Sie weist ein den Rauchgasquerschnitt vollständig ausfüllendes Wirbelbett und/oder eine zirkulierende Wirbelschicht, die z.B. mit Kalzium- und/oder Magnesiumkarbonat als Absorptionsmittel beaufschlagt ist, auf (DE-OS 3 009 366). Dabei wird der Anströmbeden des Wirbelbettes zweckmäßigerweise gekühlt.

Schließlich ist es bekannt, Rauchgase nach der eingangs genannten Art mit Hilfe einer zirkulierenden Wirbelschicht von Schadstoffen zu befreien, wobei die Mischtemperatur von Rauchgas und Reaktionsmittel durch geeignete Abkühlung des Rauchgases auf max. 150°C eingestellt wird (DE-OS 3 235 559).

Die wesentlichen Nachteile der Naßreinigungsverfahren sind, daß der anfallende Sulfite und Sulfate, gegebenenfalls auch Chloride und Fluoride enthaltende Schlamm nur schwierig deponierbar ist und daß die gereinigten Rauchgase erneut aufgeheizt werden müssen. Die bekannten Trockenreinigungsverfahren mit stationärem oder Wanderbett sind insofern mit Nachteilen behaftet, als wegen der Grobkörnigkeit der Absorbentien das Bindevermögen für die im Rauchgas enthaltenen Verunreinigungen nur sehr unvollkommen ausgenutzt wird und wegen der vergleichsweise geringen zulässigen Gasgeschwindigkeit sowie der großen zu reinigenden Gasmengen beträchtliche Reaktorabmessungen erforderlich sind.

Die Entfernung von Schadstoffen aus Rauchgasen von 700 bis 900°C mittels der Wirbelschichttechnologie bereitet insofern Schwierigkeiten, als der Rost der Wirbelschicht aus extrem hitzebeständigem Material ausgeführt oder aber in verfahrenstechnisch aufwendiger Weise mit einem Kühlsystem versehen werden muß. Zudem entzieht das frisch aufgegebene kalte Reaktionsmittel dem Rauchgas fühlbare Wärme, die dann für die Dampferzeugung nicht mehr zur Verfügung steht. Weiterhin bedarf es zusätzlicher Maßnahmen, um die Temperatur der Rauchgase, die beim Austritt aus dem Brennraum üblicherweise heißer und beim Austritt aus dem Abhitzekessel üblicherweise kälter sind, auf einen Wert im Bereich von 700 bis 900°C einzustellen. Es bedarf eines wirtschaftlich praktisch nicht vertretbaren Um- oder Neubaus bereits bestehender Abhitzesysteme, wobei Sonderkonstruktionen erforderlich sind.

Das Verfahren gemäß DE-OS 3 235 559 hat - bei grundsätzlich richtiger Konzeption - den Nachteil, daß es nicht bei allen Betriebszuständen, unter denen Rauchgase zu reinigen sind, befriedigende Ergebnisse liefert bzw. nicht ohne einen gewissen verfahrensmäßigen Aufwand betrieben werden kann.

Aufgabe der Erfindung ist es, ein Verfahren bereitzustellen, das die Nachteile der bekannten Gasreinigungsverfahren nicht aufweist, einfach in der Durchführung ist, sich billiger Absorptionsmittel bedienen kann und sich in einfachster Weise an alle Betriebszustände der Rauchgas liefernden Feuerungsanlagen anpassen läßt.

Die Aufgabe wird gelöst, indem das Verfahren der eingangs genannten Art entsprechend der Erfindung derart ausgestaltet wird, wie es im kennzeichnenden Teil des Anspruchs 1 angegeben ist.

Das bei der Erfindung angewendete Prinzip der expandierten Wirbelschicht zeichnet sich dadurch aus, daß - im Untershied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und dem darüber befindlichen Staubraum ist nicht vorhanden, statt dessen nimmt innerhalb des Reaktors die Feststoffkonzentration von unten nach oben ab.

Als Reaktionsmittel sind vor allem Calciumoxid, insbesondere Calciumhydroxid wegen seines besonders hohen Reaktionsvermögens, vorteilhaft. Hierbei empfiehlt es sich, das Calciumhydroxid in einer Kalktrockenlöschanlage zu erzeugen.

Die Reaktionsmittel werden in fester Form, aber auch in Form von wäßrigen Lösungen oder Suspensionen zugeführt. Die Wahl der jeweiligen Zuführungsform richtet sich nach dem Lastverhalten der Feuerungsanlage. Für den Grundlast- bzw. Dauerlastbetrieb, der üblicherweise mit geringen bis mäßig hohen $SO_2$-Gehalten im Rauchgas verbunden ist, wird das Reaktionsmittel im allgemeinen in Form einer wäßrigen Lösung oder Suspension eingetragen. Auf diese Weise lassen sich bei gleichzeitiger Einstellung der Mischtemperatur von Rauchgas und Reaktionsmittel mittels direkter Wassereindusung die erforderlichen $SO_2$-Endgehalte erzielen.

Bei hohen $SO_2$-Gehalten im Rauchgas, die häufig mit der Verfeuerung minderwertiger Brennstoffe verbunden ist, wird zusätzlich Reaktionsmittel in fester Form zudosiert. Auf diese Weise ist es dann ohne Änderung in der nassen und trockenen Reaktionsmittelaufgabe möglich, die $SO_2$-Emission auf dem vorgesehenen niedrigen Wert zu halten. Insbesondere bedarf es bei dieser Ausgestaltung der Erfindung keines zusätzlichen andersartigen Reaktionsmittels, das beispielsweise bei der Bindung der Schwefeloxide wasserlösliche Salze bildet und dadurch ein Deponieproblem zur Folge hat. Außerdem wird in diesem Fall gegenüber einer nur nassen Reaktionsmittelaufgabe die Unterschreitung des Wasserdampftaupunktes mit Sicherheit vermieden.

Im Anfahrbetrieb der Feuerungsanlage sowie bei häufigem An- und Abfahren (Spitzenlastbetrieb) wird erfindungsgemäß Reaktionsmittel nur in trockener Form aufgegeben. Dadurch ist eine Schadstoffentfernung auch ohne zusätzliche Energie verbrauchende Aufheizung der zunächst kalten Rauchgase gewährleistet sowie eine Taupunktsunterschreitung ausgeschlossen .

Bei Einbringung des Reaktionsmittels in wäßriger Phase ist es vorteilhaft, den Feststoffanteil auf 5 bis 30 Gew.-% einzustellen.

Das Reaktionsvermögen der Reaktionsmittel steigt mit fallender Mischtemperatur für Rauchgas und Reaktionsmittel. Eine Weiterbildung des erfindungsgemäßen Verfahrens sieht daher vor, durch eine entsprechende Abkühlung des Rauchgases die Mischtemperatur von Rauchgas und Reaktionsmittel auf einen Wert von 3 bis 30°C über dem Wasserdampftaupunkt einzustellen.

Sofern die zu reinigenden Rauchgase erhebliche Gehalte an Stickoxiden aufweisen, empfiehlt es sich, zu deren Entfernung an sich bekannte Agentien, wie Alkalihydroxid, -carbonat, -bicarbonat und/oder Zeolith, oder auch Wasserstoffperoxid bzw. Ammoniak zuzusetzen.

Eine bevorzugte Ausgestaltung der Erfindung besteht darin, den Wirbelzustand in der Wirbelschicht derart einzustellen, daß sich unter Verwendung der Definition über die Kennzahlen von Froude und Archimedes folgende Bereiche ergeben:

$$1 \leqq 3/4 \cdot Fr^2 \cdot \frac{\rho\, g}{\rho\, k - \rho\, g} \leqq 100$$

bzw.

$$1 \leqq Ar \leqq 1000.$$

wobei

$$Ar = \frac{d_k^3 \cdot g\, (\rho_k - \rho_g)}{\rho\, g \cdot v^2}$$

und

$$Fr^2 = \frac{u^2}{g \cdot d_k}$$

sind.

Hierbei bedeuten:

u die relative Gasgeschwindigkeit in m/sec

Ar die Archimedeszahl

Fr die Froude-Zahl

$\rho g$ die Dichte des Gases in kg/m³

$\rho k$ die Dichte des Feststoffteilchens in kg/m³

$d_k$ den Durchmesser des kugelförmigen Teilchens in m

v die kinematische Zähigkeit in m²/sec

g die Gravitationskonstante in m/sec².

Eine zusätzliche Möglichkeit zur Einstellung auf die geeignete Mischtemperatur ist durch Wassereindüsung in den Wirbelschichtreaktor selbst gegeben.

Die im Wirbelschichtreaktor einzustellende Gasgeschwindigkeit sollte in Relation zur mittleren Teilchengröße, bei geringeren Teilchengrößen im unteren Bereich und bei größeren Teilchengrößen im oberen Bereich, liegen.

Die im Wirbelschichtreaktor einzustellende Suspensionsdichte kann in weiten Grenzen variieren. Besonders vorteilhaft ist es jedoch, Suspensionsdichten im unteren Bereich zu wählen, da dann der Druckverlust beim Durchgang des Rauchgases durch das Wirbelbett besonders niedrig ist. Eine vorteilhafte Ausgestaltung der Erfindung sieht daher vor. die mittlere Suspensionsdichte im Wirbelschichtreaktor auf 0,2 bis 2 kg/m³ einzustellen.

Um eine möglichst hohe Beladung des Reaktionsmittels mit den im Rauchgas enthaltenen Verunreinigungen sowie eine möglichst optimale Feststoff/Gas-Vermischung zu erzielen, sieht eine weitere vorteilhafte Ausgestaltung der Erfindung vor, die Menge des stündlich umlaufenden Reaktionsmittels auf das 20- bis 150-fache der im Schacht des Wirbelschichtreaktors befindlichen Reaktionsmittelmenge einzustellen.

Insbesondere die Reaktionsmittelbeladung läßt sich zusätzlich verbessern, wenn man in Weiterbildung des erfindungsgemäßen Verfahrens beladenes Reaktionsmittel aktiviert, z.B. durch Mahlen und erneut in die zirkulierende Wirbelschicht zurückführt. Beispielsweise wird durch den Mahlvorgang neue zur Reaktion befähigte Oberfläche geschaffen.

Das der Entfernung von Schwefeloxiden bzw. anderen Schadstoffen dienende Reaktionsmittel wird in den unteren Bereich des Wirbelschichtreaktors aufgegeben.

Insbesondere, wenn die Verwendung carbonatischer Reaktionsmittel, wie Kalk und/oder Dolomit beabsichtigt ist, sieht eine vorteilhafte Ausführungsform der Erfindung vor, einen Teil des Reaktionsmittels in den heißen Rauchgasstrom innerhalb des Abhitzekesselbereiches einzutragen. Dies hat den Vorzug, daß durch die fühlbare Wärme des Rauchgases eine mindestens teilweise Kohlendioxidabspaltung erzielt wird, wodurch ein besonders aktives Reaktionsmittel entsteht. Der Bereich des Abhitzekessels, der eine Temperatur von 600-1100°C aufweist, ist für diesen Zweck besonders geeignet.

Ein besonders günstiges Reaktionsvermögen des Reaktionsmittels wird erzielt, wenn der Wasserdampfpartialdruck des Gases im Wirbelschichtreaktor möglichst hoch eingestellt, d.h. wenn die Rauchgasreinigung geringfügig oberhalb des Wasserdampftaupunktes (ca. 3°C) betrieben wird.

Der der Rauchgasreinigung dienende Wirbelschichtreaktor kann von rechteckigem, quadratischem oder kreisförmigem Querschnitt sein. Als Gasverteiler kann ein Düsenrost vorgesehen werden. Insbesondere bei großen Reaktorquerschnitten und hohen Gasdurchsätzen ist es jedoch vorteilhaft, den unteren Bereich des Wirbelschichtreaktors konisch auszubilden und das Rauchgas durch eine venturiartige Düse einzutragen. Die letztgenannte Ausbildung ist wegen des besonders niedrigen Druckverlustes und der Unanfälligkeit gegenüber Verschmutzung und Verschleiß von Vorteil.

Der Eintrag des Reaktionsmittels in den Wirbelschichtreaktor erfolgt auf übliche Weise, am zweckmäßigsten über eine oder mehrere Lanzen. z.B. durch pneumatisches Einblasen bei Aufgabe in trockener Form und durch Rücklaufdüsen bei Aufgabe in wäßriger Phase. Infolge der bei zirkulierenden Wirbelschichten gegebenen guten Quervermischung reicht eine vergleichsweise geringe Zahl von Eintragslanzen bzw. Düsen aus.

Die Reinigung des Rauchgases kann bei weitgehend beliebigen Drücken, z.B. bis etwa 25 bar, vorgenommen werden. Ein Überdruck wird insbesondere dann vorzusehen sein, wenn auch der Verbrennungsprozeß unter Überdruck geführt wird. Bei der Sorption unter Druck ist zu berücksichtigen, daß mit steigendem Druck die Gasgeschwindigkeit im Wirbelschichtreaktor in Richtung der genannten unteren Geschwindigkeit einzustellen ist. Im allgemeinen wird man jedoch die Rauchgasreinigung bei einem Druck um ca. 1 bar vornehmen.

Die zirkulierende Wirbelschicht kann unter Verwendung eines Wirbelschichtreaktors, eines Zyklonabscheiders oder eines anderen mechanischen Abscheiders und einer in den unteren Bereich des Wirbelschichtreaktors mündenden Rückführleitung gebildet werden. In diesem Fall wird der den Zyklonabscheider verlassende Gasstrom einer Feinreinigung, z.B. mittels eines Elektrofilters, unterworfen.

Besonders zweckmäßig ist es, die Abscheidung des mit den Gasen aus dem Wirbelschichtreaktor ausgetragenen Feststoffes in einem unmittelbar nachgeschalteten Elektrofilter vorzunehmen. Hierdurch wird der Druckverlust des Gases zusätzlich verringert. Die Verwendung eines mehrfeldrigen Elektrofilters gibt zudem die Möglichkeit, die mit den Gasen ausgetragenen Feststoffe nach der Korngröße und der Zusammensetzung zu fraktionieren und beispielsweise den Feinanteil mit entsprechend hoher Beladung auszuschleusen und die gröbere oder die gröberen Fraktionen - gegebenenfalls nach Reaktivierung - zur Ausbildung der zirkulierenden Wirbelschicht in den Wirbelschichtreaktor zurückzuführen.

Mit Hilfe des erfindungsgemäßen Verfahrens kann das gesamte Rauchgas eines Verbrennungsprozesses gereinigt werden. In Abhängigkeit von den jeweiligen behördlichen Auflagen, ist es auch möglich, einen Teilstrom des Rauchgases zu reinigen und diesen anschließend - mit dem nichtgereinigten Teilstrom vermischt - in den Kamin zu führen. Schließlich kann die Reinigung auch in Kombination mit Naßreinigungsverfahren durchgeführt werden.

Rauchgase im Sinne der vorliegenden Erfindung sind Abgase aus Kraftwerken, aus Feuerungsanlagen auf Basis fossiler Brennstoffe, aus Müllverbrennungsanlagen, aus Anlagen zur Schlammverbrennung und dergl., die jeweils mit Sauerstoffüberschuß oder stöchiometrischem Sauerstoffangebot betrieben werden.

Die Vorteile des erfindungsgemäßen Verfahrens sind, daß es ohne Veränderung der bestehenden Wärmeaustauscherteile hinter bestehende Verbrennungsanlagen geschaltet werden kann, und im Bedarfsfall mit jeder anderen Form der Gasreinigung kombiniert werden kann. Irgendwelche sich an die Gasreinigung anschließende Folgebehandlungen können entfallen und es sind - auf die Einheit der Fläche des Wirbelschichtreaktors bezogen - sehr hohe Rauchgasdurchsätze möglich. Die in der zirkulierenden Wirbelschicht umlaufende Reaktionsmittelmenge übt eine beträchtliche Pufferwirkung aus, so daß selbst bei starken Schwankungen im Schwefeldioxidgehalt des Rauchgases ohne großen regeltechnischen Aufwand für die Dosierung des Reaktionsmittels selbst eine sichere Gasreinigung herbeizuführen ist.

Die herausragendsten Vorteile sind jedoch, daß sich das erfindungsgemäße Verfahren jedem Betriebszustand der vorgeschalteten Feuerungsanlage in einfachster Weise anpassen läßt. Bei Lastwechsel ist ein Rückgriff auf andersartige Reaktionsmittel entbehrlich. Auf zusätzliche Maßnahmen, wie Aufheizen der Rauchgase bei bestimmten Lastzuständen oder Wiederaufheizen der gereinigten Gase, kann verzichtet werden. Vorübergehend schlechte Emissionswerte werden mit Sicherheit ausgeschlossen. Extrem hohe $SO_2$-Gehalte im Rauchgas können ohne Zusatzeinrichtungen und Zusatzstoffe sicher auf die geforderten Endgehalte reduziert werden.

Die Erfindung wird anhand der Fig. und des Beispiels beispielsweise und näher erläutert:

Die Fig. stellt ein Fließschema des erfindungsgemäßen Verfahrens dar.

Das zu reinigende Rauchgas wird mittels Leitung 1 über das konisch ausgebildete und mit einer venturiartigen Düse versehene Unterteil 2 in den Wirbelschichtreaktor 3 eingetragen. Über Leitung 4 wird trockenes Calciumoxid und über Leitung 5 Calciumhydroxid in wäßriger Phase zugeführt.

Das in wäßriger Phase befindliche Calciumhydroxid stammt aus dem Vorratsbehälter 6, dem es aus einem Löschbehälter 7 mit Wasserzuführung 8 und Zufuhrleitung 9 für trockenes Calciumoxid zufließt.

Die im Wirbelschichtreaktor 3 gebildete Feststoff/Gas-Suspension verläßt diesen über Leitung 10 und gelangt in das mit Vorabscheider 11 ausgerüstete Elektrofilter 12. Der Feststoff sammelt sich im Vorabscheider 11 und im Staubbunker 13 und wird über Leitung 14 in den Wirbelschichtreaktor 3 zurückgeführt bzw. über Leitung 15 in einen Silo 16 ausgeschleust.

Das gereinigte Rauchgas gelangt über Leitung 17 zum Kamin 18.

Mit 19 ist ein Wasserspeicher bezeichnet, von dem im Bedarfsfall der Wirbelschichtreaktor 3 über Leitung 20 unabhängig von der Reaktionsmittelzugabe mit Wasser versorgt werden kann.

Beispiel

Zu reinigen war ein Rauchgas einer Braunkohlenfeuerung in einer Menge von 640.000 m³/h (im Normzustand). Das Abgas enthielt (bezogen auf den Normzustand)

12.500     mg/m³ $SO_2$

200     mg/m³ HCl und

13.000     mg/m³ Flugasche

Der zum Einsatz kommende Wirbelschichtreaktor hatte im zylindrischen Bereich einen Durchmesser von 8,5 m und eine Höhe von 20 m.

Das Rauchgas wurde über Leitung 1 und das venturiartig ausgestaltete Unterteil 2 dem Wirbelschichtreaktor 3 zugeführt. Über Leitung 4 wurde trockenes Calciumoxid mit einer mittleren Teilchengröße von 7,5 μm in einer Menge von 3.810 kg/h zudosiert. Weitere 7.630 kg/h Calciumoxid wurden als Suspension mit ca. 20 Gew.-% Feststoffanteil über Leitung 5 zugeführt und unter 38 bar Zerstäubungsdruck aufgegeben. Die Gasgeschwindigkeit im Wirbelschichtreaktor 3 betrug ca. 5 m/sec. (angegeben als Leerrohrgeschwindigkeit), die mittlere Suspensionsdichte ca. 1 kg/m³. Die Mischtemperatur von Rauchgas und in der zirkulierenden Wirbelschicht befindlichem Feststoff betrug 70°C.

Die Temperatureinstellung erfolgt durch direkte Wassereindüsung über Leitung 20 mittels Rücklaufdüsen. Die am Kopf des Wirbelschichtreaktors 3 über Leitung 10 austretende Feststoff/Gas-Suspension, die eine Suspensionsdichte von 600 g/m³ (im Normzustand) besaß, gelangte dann über den Vorabscheider 11 in das zweifeldrige Elektrofilter 12. Im Vorabscheider 11 und im Staubbunker 13 fielen insgesamt 384 t/h Feststoff an. Hiervon wurden ca. 357 t über Leitung 14 in den unteren Bereich des Wirbelschichtreaktors 3 zurückgeführt und ca. 27 t Feststoff über Leitung 15 ausgetragen. Der Feststoff bestand im wesentlichen aus einem Gemisch von Calciumsulfit, Calciumchlorid, Calciumsulfat sowie unumgesetztem Calciumhydroxid und Flugstaub.

Das über Leitung 17 abgeführte Abgas enthielt - auf den Normzustand bezogen -

400     mg/m³ $SO_2$

< 10     mg/m³ HCl und

40     mg/m³ Staub

Das heißt bei einem auf dem $SO_2$-Gehalt im Rauchgas bezogenen stöchiometrischen Angebot von Calciumhydroxid (bezogen auf Schwefeldioxid von 1,3:1 war der Grad der Schwefeloxid-Entfernung 97%.

Während eines ca. 4-6 Stunden andauernden Anfahrbetriebes wird zunächst die Entschwefelung nur durch Zugabe von trockenem Calciumoxid betrieben. Nach Erreichen einer Mindesttemperatur von ca. 90°C wird die Reaktionsmittelzugabe in wässriger Phase zugeschaltet. Gleichzeitig wird die Zugabemenge von trockenem Calciumoxid entsprechend zurückgenommen.

Bei einer erforderlich werdenden Umstellung des Kraftwerkbetriebes von Grundlast mit Braunkohle auf Spitzen- und Mittellast mit Steinkohle ergeben sich die folgenden Rauchgasdaten (im Normzustand):

Gasmenge    480.000 m³/h
$SO_2$          2.500 mg/m³
Flugstaub    4.000 mg/m³

Für diesen geänderten Betrieb bedarf es keiner prinzipiellen, sondern nur einer graduellen Änderung der Arbeitsweise. Hierzu wird die oben beschriebene Fahrweise wie folgt angepaßt:

Über Leitung 4 wurde dem Wirbelschichtreaktor 3 Calciumhydroxid mit einer mittleren Teilchengröße von 3,5 μm in einer Menge von 1.870 kg/h trocken zudosiert.

Die Gasgeschwindigkeit im Wirbelschichtreaktor 3 beträgt ca. 3,8 m/sec. (angegeben als Leerrohrgeschwindigkeit), die mittlere Suspensionsdichte ca. 1 kg/m³, die Mischtemperatur von Rauchgas und in der zirkulierenden Wirbelschicht befindlichem Feststoff 70°C. Die Temperatureinstellung erfolgte durch direkte Wassereindüsung über Leitung 20 mittels Rücklaufdüsen.

Die am Kopf des Wirbelschichtreaktors 3 über Leitung 10 austretende Feststoff/Gas-Suspension, die eine Suspensionsdichte von 600 g/m³ (im Normzustand) besaß, gelangte dann über den Vorabscheider 11 in das zweifeldrige Elektrofilter 12. Im Vorabscheider 11 und im Staubbunker 13 fielen insgesamt 288 t/h Feststoff an. Hiervon wurden ca. 284 t über Leitung 14 in den unteren Bereich des Wirbelschichtreaktors 3 zurückgeführt und ca. 4 t über Leitung 15 ausgetragen. Dieser bestand im wesentlichen aus einem Gemisch von Calciumsulfit, Calciumchlorid, Calciumsulfat sowie unumgesetztem Calciumhydroxid und Flugstaub.

Das über Leitung 17 abgeführte Abgas enthielt - auf den Normzustand bezogen -

100    mg/m³ $SO_2$
< 10   mg/m³ HCl und
40     mg/m³ Staub

Das heißt, bei einem auf dem $SO_2$-Gehalt im Rauchgas bezogenen stöchiometrischen Angebot von Calciumhydroxid (bezogen auf Schwefeldioxid) von 1,3:1 war der Grad der Schwefeldioxid-Entfernung 96%.


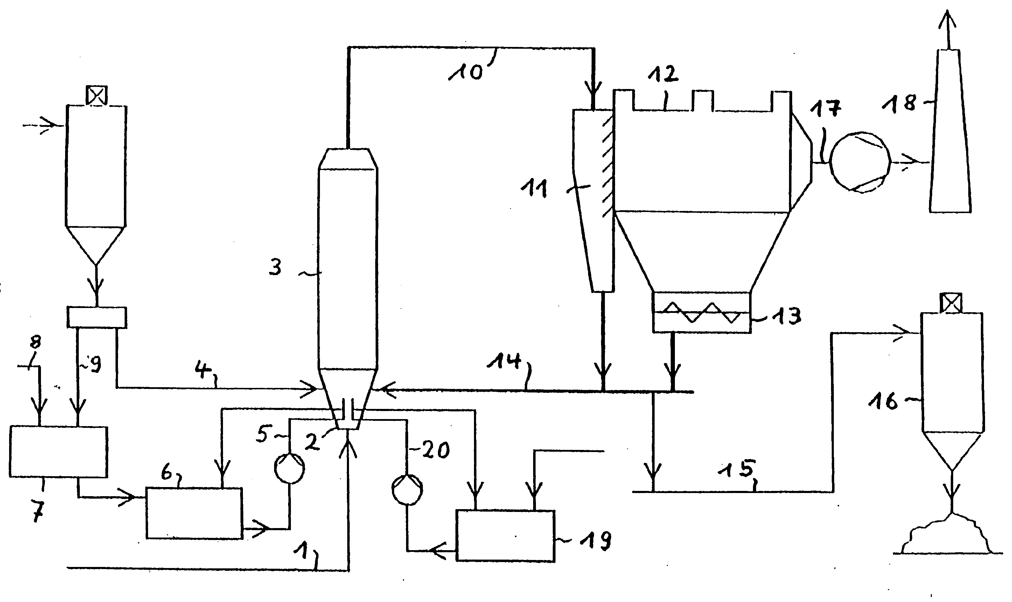

**Patentansprüche**

1.   Verfahren zur Entfernung von Schwefeloxiden und gegebenenfalls auch anderen, gasförmigen Schadstoffen aus Rauchgasen, bei dem hohe $SO_2$-Gehalte auftreten, mittels eines in einer zirkulierenden Wirbelschicht geführten Reaktionsmittels mit Natrium, Kalium, Calcium und/oder Magnesium als Kation und Oxid, Hydroxid und/oder Carbonat als Anion, bei dem die Gasgeschwindigkeit im Wirbelschichtreaktor auf 1 bis 10 m/sec, angegeben als Leerrohrgeschwindigkeit, die mittlere Suspensionsdichte im Wirbelschichtreaktor auf 0,1 bis 100 kg/m³, die mittlere Teilchengröße des Reaktionsmittels auf 1 bis 300 μm und die Menge des stündlichen Reaktionsmittelumlaufs mindestens auf das 5-fache der im Schacht des Wirbelschichtreaktors befindlichen Reaktionsmittelmenge eingestellt und zur Einstellung der Mischtemperatur in den Wirbelschichtreaktor Wasser eingespritzt wird, **dadurch gekennzeichnet**, daß man in Abhängigkeit von Abgastemperatur und $SO_2$-Gehalt im Abgas Reaktionsmittel in trockener Form und/oder anstelle der Zuführung des Reaktionsmittels in trockener Form Reaktionsmittel in Form einer wäßrigen Lösung oder Suspension über getrennte Aufgabestellen separat zuführt, *die Form der Zugabe durch die Abgastemperatur und den $SO_2$-Gehalt im Abgas regelt,* wobei bei hohen $SO_2$-Gehalten in Rauchgas sowohl Reaktionsmittel in trockener Form als auch in Form einer wässrigen Lösung oder Suspension zugeführt werden, *und diese Zugabe im unteren Bereich des Wirbelschichtreaktors erfolgt* und daß die Entfernung der Schadstoffe bei einer Mischtemperatur von Rauchgas und Reaktionsmittel von max. 50°C über dem Wasserdampftaupunkt ohne unter schreitung des Wassertaupunktes erfolgt.

2.   Verfahren nach Anspruch 1, dadurch gekennzeichnet, daß man bei Einbringung des Reaktionsmittels in wäßriger Phase auf einen Feststoffanteil von 5 bis 30 Gew.-%, einstellt.

3.   Verfahren nach Anspruch 1 oder 2, dadurch gekennzeichnet, daß man durch eine entsprechende Abkühlung des Rauchgases die Mischtemperatur von Rauchgas und Reaktionsmittel auf einen Wert von 3 bis 30°C über dem Wasserdampftaupunkt einstellt.

4. Verfahren nach Anspruch 1, 2 oder 3, dadurch gekennzeichnet, daß man die zirkulierende Wirbelschicht hinsichtlich der Zahlen von Archimedes und Froude gemäß den Bedingungen

$$1 \leqq 3/4 \cdot Fr^2 \cdot \frac{\rho\,g}{\rho\,k - \rho\,g} \leqq 100$$

bzw.
$$1 \leqq Ar \leqq 1000$$
betreibt.

5. Verfahren nach Anspruch 1, 2, 3 oder 4, dadurch gekennzeichnet, daß man die mittlere Suspensionsdichte im Wirbelschichtreaktor auf 0,2 bis 2 kg/m³ einstellt.

6. Verfahren nach einem oder mehreren der Ansprüche 1 bis 5, dadurch gekennzeichnet, daß man die Menge des stündlich umlaufenden Reaktionsmittels auf das 20- bis 150-fache der im Schacht des Wirbelschichtreaktors befindlichen Reaktionsmittelmenge einstellt.

7. Verfahren nach einem oder mehreren der Ansprüche 1 bis 6, dadurch gekennzeichnet, daß man einen Teilstrom beladenen Reaktionsmittels der zirkulierenden Wirbelschicht entnimmt und aktiviert, z.B. durch Mahlen, und erneut in die zirkulierende Wirbelschicht zurückführt.

8. Verfahren nach einem oder mehreren der Ansprüche 1 bis 7, dadurch gekennzeichnet, daß man einen Teil des Reaktionsmittels in den heißen Rauchgasstrom innerhalb des Abhitzekesselbereiches einträgt.

## Claims

1. A process for removing sulfur oxides and optionally other gaseous pollutants from flue gases, wherein high $SO_2$ contents occur, by means of a reactant which is contained in a circulating fluidized bed and contains sodium, potassium, calcium and/or magnesium as a cation and oxide, hydroxide and/or carbonate as an anion, wherein a gas velocity between 1 and 10 meters per second (stated as empty-pipe velocity) is maintained in the fluidized bed reactor, a mean suspension density between 0,1 and 100 kg/m³ is maintained in the fluidized bed reactor, the mean particle size of the reactant is between 1 and 300 μm, and the quantity of reactant which is circulated per hour is at least 5 times the quantity of reactant contained in the shaft of the fluidized bed reactor and wherein for maintaining the temperature of the mixture, water is injected into the fluidized bed reactor, characterized in that depending on the temperature of the flue gas and the $SO_2$ content of the flue gas, reactant in a dry form and/or instead of charging reactant in a dry form, reactant in the form of an aqueous solution or suspension is charged separately at different locations, the form of the charge is controlled in dependence of the temperature and the $SO_2$ content of the flue gas, whereby in the case of high $SO_2$ contents in the flue gas, reactant is charged simultaneously in a dry form and an aqueous solution or suspension and that this charge is effected in the lower region of the circulating fluidized bed reactor and that the removal of the pollutants is effected, without falling below the dew point of the water, when the temperature of the mixture of flue gas and reactant is not in excess of 50°C above the dew point temperature of water vapor.

2. A process according to claim 1, characterized in that the reactant - if charged in an aqueous phase - has a solids content of 5 to 30 wt.-%.

3. A process according to claim 1 or 2, characterized in that the flue gas is cooled so that the temperature of the mixture of flue gas and reactant is maintained at a temperature that is 3 to 30°C above the dew point temperature of water vapor.

4. A process according to claim 1, 2 or 3, characterized in that the circulating fluidized bed is operated under the following conditions defined by the Archimedes and Froude numbers:

$$1 \leqq 3/4 \cdot Fr^2 \cdot \frac{\rho\,g}{\rho\,k - \rho\,g} \leqq 100$$

and
$$1 \leqq Ar \leqq 1000.$$

5. A process according to claim 1, 2, 3 or 4, characterized in that the mean suspension density in the fluidized bed reactor is maintained between 0.2 and 2 kg/m³.

6. A process according to any of claims 1 to 5, characterized in that the quantify of reactant circulating per hour is 20 to 150 times the quantity of reactant contained in the shaft of the fluidized bed reactor.

7. A process according to any of claims 1 to 6, characterized in that a partial stream of laden reactant is withdrawn from the circulating fluidized bed and is activated, e.g., by grinding, and returned to the circulating fluidized bed.

8. A process according to any of claims 1 to 7, characterized in that part of the reactant is charged into the hot flue gas stream within the waste heat boiler portion.

**Revendications**

1. Procédé d'élimination d'oxydes de soufre et, le cas échéant, d'autres substances polluantes gazeuses de gaz de fumée dans lequel il se produit de grandes teneurs en $SO_2$, au moyen d'un agent de réaction passant dans un lit fluidisé et circulant et ayant du sodium, du potassium, du calcium et/ou du magnésium comme cation et de l'oxyde, de l'hydroxyde et/ou du carbonate comme anion, dans lequel la vitesse des gaz dans le réacteur à lit fluidisé est réglée entre 1 et 10 m/s (exprimée en vitesse en tuyau vide), la masse volumique moyenne de la suspension dans le réacteur à lit fluidisé entre 0,1 et 100 kg/m³, la granulométrie moyenne de l'agent de réaction entre 1 et 300 microns et le débit horaire d'agent de réaction en circulation représente au moins 5 fois la quantité d'agent de réaction se trouvant dans la cuve du réacteur à lit fluidisé et de l'eau étant projetée dans le réacteur à lit fluidisé pour régler la température de mélange, caractérisé en ce qu'il consiste à amener séparément, par des emplacements de chargement distincts, en fonction de la température de l'effluent gazeux et de la teneur en $SO_2$ de l'effluent gazeux, l'agent de réaction sous forme sèche et/ou, au lieu de l'amener sous forme sèche, à l'amener sous la forme d'une solution aqueuse ou d'une suspension aqueuse, à régler la forme de l'addition en fonction de la température de l'effluent gazeux et de la teneur en $SO_2$ de l'effluent gazeux, de l'agent de réaction à la fois sous forme sèche et sous la forme d'une solution ou d'une suspension aqueuse étant amenée lorsque le gaz de fumée a de grandes teneurs en $SO_2$, cette addition s'effectuant dans la partie inférieure au réacteur à lit fluidisé; et à effectuer l'élimination des substances polluantes à une température du mélange des gaz de fumée et de l'agent de réaction supérieure au maximum de 50°C au point de rosée de la vapeur d'eau sans qu'elle soit inférieure au point de rosée.

2. Procédé suivant la revendication 1, caractérisé en ce qu'il consiste à régler la proportion de matière solide entre 5 et 30 % en poids lors de l'introduction de l'agent de réaction en phase aqueuse.

3. Procédé suivant la revendication 1 ou 2, caractérisé en ce qu'il consiste à régler la température du mélange des gaz de fumée et de l'agent de réaction à une valeur supérieure de 3 à 30°C au point de rosée de la vapeur d'eau, par un refroidissement adéquat du gaz de fumée.

4. Procédé suivant la revendication 1, 2 ou 3, caractérisé en ce qu'il consiste à faire fonctionner le lit fluidisé circulant, du point de vue des nombres d'Archimède et de Froude, suivant les conditions

$$1 \leqq 3/4 \cdot Fr^2 \frac{\rho g}{\rho k - \rho g} \leqq 100,$$

et

$$1 \leqq Ar \leqq 1000.$$

5. Procédé suivant la revendication 1, 2, 3 ou 4, caractérisé en ce qu'il consiste à régler la masse volumique moyenne de la suspension dans le réacteur à lit fluidisé, entre 0,2 et 2 kg/m³.

6. Procédé suivant la revendication 1, 2, 3 ou 4, caractérisé en ce que le débit horaire de l'agent de réaction en circulation, représente 20 à 150 fois la quantité d'agent de réaction se trouvant dans la cuve du réacteur à lit fluidisé.

7. Procédé suivant l'une ou plusieurs des revendications 1 à 6, caractérisé en ce qu'il consiste à prélever un courant partiel d'agent de réaction chargé du réacteur à lit fluidisé circulant et à l'activer par exemple par broyage et à le retourner au lit fluidisé circulant.

8. Procédé suivant l'une ou plusieurs des revendications 1 à 7, caractérisé en ce qu'il consiste à charger

EP 0 211 458 B2

une partie de l'agent de réaction dans le courant de gaz de fumée chaud, dans la zone de la chaudière de récupération de la chaleur.

9